# EUROPEAN PATENT SPECIFICATION

(11) **EP 1 486 712 B1**
(45) Date of publication and mention of the grant of the patent: **07.01.2009**
(21) Application number: 04013267.2
(22) Date of filing: 04.06.2004
(51) Int. Cl.: F16K 31/40, F16K 31/42

(54) **Three-way valve**
Dreiwegeventil
Soupape a trois voies

(30) Priority: 09.06.2003 JP 2003163074
(43) Date of publication of application: 15.12.2004
(73) Proprietor: TGK CO., Ltd., Hachioji-shi, Tokyo 193-0942 (JP)
(72) Inventor: Koyama, Katsumi, Hachioji-shi, Tokyo 193-0942 (JP)
(74) Representative: Grünecker, Kinkeldey, Stockmair & Schwanhäusser Anwaltssozietät

(56) References cited:
- CH-A- 652 181
- DE-A- 1 917 499
- GB-A- 789 241

## Description

The present invention relates to a three-way valve, according to the preamble part of claim 1.

A known the three-way valve (JP-H05-64582U) utilizes introduced fluid pressure for switching operations of the first and second main valves. A single valve element opens and closes passages between first and second ports and between the second and a third port. Pistons actuate the valve element such that upstream-side fluid pressure is introduced into a pressure chamber of one piston, while the pressure of a pressure chamber of the other piston is released. These actions are controlled by solenoid-operated pilot valves having three-way pilot valve structures. Pressure passages between the upstream side of the three-way valve, the pressure chambers of the pistons, and the low-pressure side of the three-way valve are formed by capillary tubes or the like. This concept increases the number of component parts and man-hours for assembling the component parts.

DE-A-1917 499 discloses a four-way control valve being a combination of two three-way control valves. The four-way control valve is actuated by a solenoid controlled pilot valve. Each three-way control valve contains two valve elements which are rigidly interconnected by a piston rod penetrating two valve seats for the valve elements. The interlocked valve elements are connected with a control piston made from elastic material and having a larger pressure receiving area in the pressure control chamber than the cross-sectional area of both valve seats.

The solenoid controlled three-way valve of CH 652 181 A contains a single valve element alternatingly co-acting with one of two opposite valve seats. The valve element is rigidly coupled with an actuating piston the pressure receiving area of which is larger than the cross-sectional area of both valve seats. The solenoid controlled pilot valve contains a single valve disc also alternatingly co-acting with one of two pilot valve seats.

The three-way control valve of Fig. 5 of GB-A-789 241 has two valve seats each between respective two of the three ports. Two valve elements co-act alternatingly with one of the two valve seats. Both valve elements are rigidly coupled with one another by a connection tube which additionally is used for the pilot valve function. Both valve elements are commonly urged by a valve spring in one moving direction. An actuating piston is connected with each valve element. One of the actuating pistons has throttle openings through which the actuating pressure for the respective pressure control chamber is tapped. The pressure receiving areas of both actuating pistons are larger than the cross-sectional areas of both valve seats.

It is an object of the present invention to provide a three-way valve of the type as mentioned above the design of which allows a reduction of the number of component parts and man-hours for assembling the component parts.

This object is achieved by the features of claim 1.

In this three-way valve, the pressure passage for relieving the respective pressures from the pressure chambers of the first and second pistons is formed in the body itself so that external capillary tubes can be dispensed with to reduce the number of component parts and man-hours for assembling the component parts. Furthermore, it is possible to form the three-way valve smaller in size. Since the pilot valve is a two-way solenoid valve for establishing or blocking the communication of the pressure passage, it is also possible to reduce the number of component parts there and the man-hours for assembling the component parts. The three-way valve can be manufactured for lower cost.

The three-way valve is configured such that a pressure chamber of a piston that is formed with an orifice for introducing high-pressure fluid and urges a first main valve in a valve-closing direction and a pressure chamber of a piston that urges a second main valve in a valve-opening direction are connected to a medium-pressure port via a pilot valve formed by a two-way solenoid valve and a pressure passage formed in a body. The pilot valve is opened or closed to place the three-way valve in a first state in which the fluid is caused to flow from a high-pressure port to the medium-pressure port via the first main valve, or a second state in which the fluid is caused to flow from the medium-pressure port to a low-pressure port via the second main valve. Thus, the pressure relieve passage is formed in the body itself.

Embodiments of the invention will be described with reference to the drawings. In the drawings are:
- Fig. 1: a central longitudinal cross-section of a three-way valve (first embodiment) in the OFF state of a solenoid,
- Fig. 2: a cross-section of the three-way valve in the ON state of the solenoid,
- Fig. 3: a cross-section of a three-way valve according to a second embodiment in the OFF state of the solenoid, and
- Fig. 4: a cross-section of the three-way valve of Fig. 3, in the ON state of the solenoid.

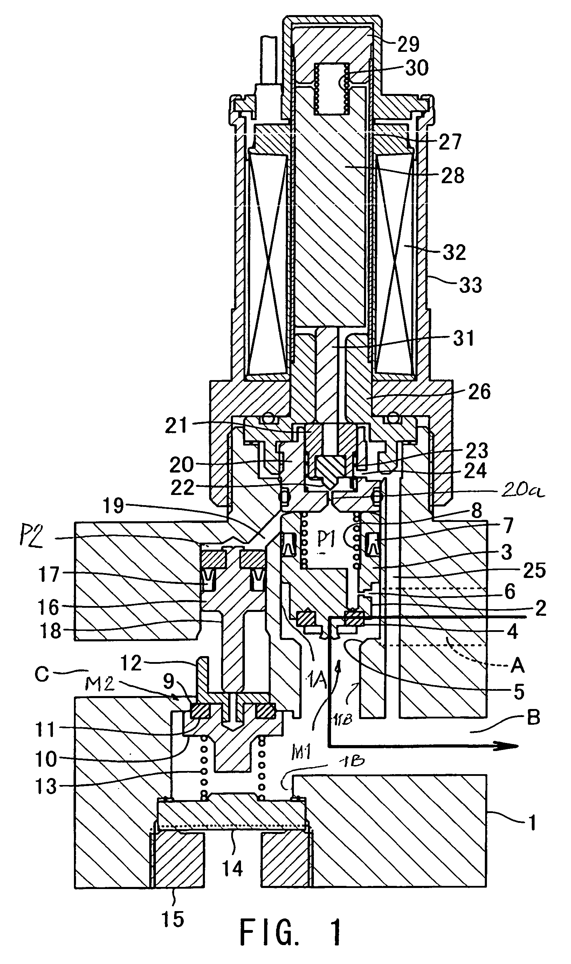

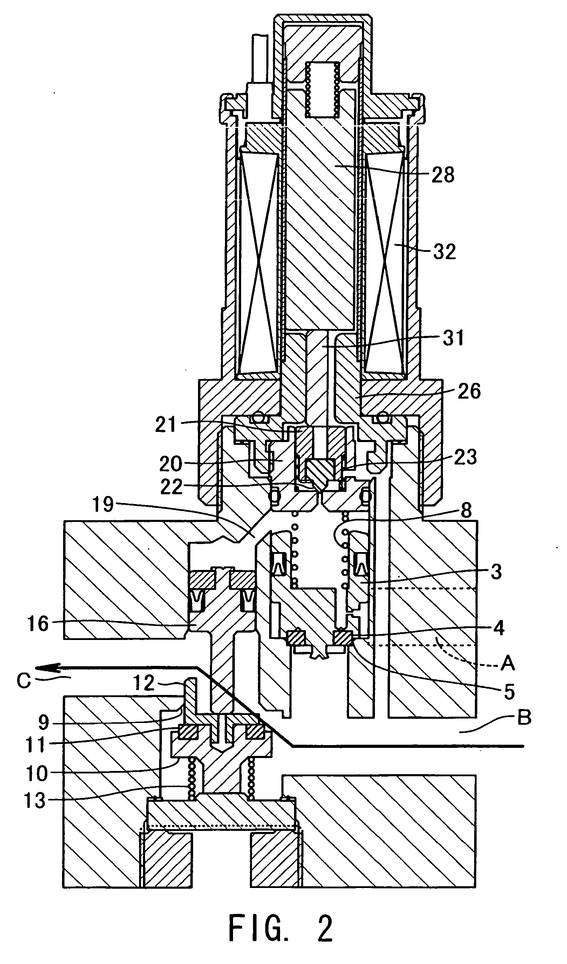

The three-way fluid valve in Figs. 1, 2 includes a high-pressure port A (inlet) in a body 1, a medium-pressure port B (outlet/inlet), and a low-pressure port C (outlet). The body 1 is formed with a cylinder bore 1A which extends downwardly from the top side to the high-pressure port A which extends laterally. The cylinder bore 1A guides a vertically moveable plug 2 and a integrally formed piston 3. An annular valve sheet 4 made of a resilient material forms a valve element rigidly fixed to the lower end of the plug 2. A valve seat 5 is integrally formed in the body 1 at the mouth of a passage 11B communicating with the medium-pressure port B. The valve seat 5 is opposed to the annular valve sheet 4. The valve sheet 4 and the valve seat 5 form a first main valve M1. The piston 3 has a recess in an upper central portion which defines a pressure chamber P1. A laterally extending orifice 6 is formed in the piston wall such that the pressure chamber P1 and the high-pressure port A communicate with each other. The piston 3 also has a circumferential groove in the outer periphery. A V-shaped packing 7 is fitted in the groove, for preventing leakage of fluid along an exterior sliding portion of the piston 3. The pressure chamber P1 accommodates a spring 8 urging the plug 2 and the piston 3 in a direction of seating the valve sheet 4 on the valve seat 5.

The body 1 is formed with another cylinder bore 1B which extends upwardly from the bottom side such that the cylinder bore 1B communicates with both the laterally extending medium-pressure port B and the laterally extending low-pressure port C.

Between the medium-pressure port B and the low-pressure port C a valve seat 9 is integrally formed with the body 1. A plug 10 is movably disposed in the cylinder bore 1B opposed to the valve seat 9 on the side of the medium-pressure port B. The plug 10 holds an annular valve sheet 11 made of a resilient material which forms another valve element. The valve sheet 11 and the valve seat 9 form a second main valve M2. The plug 10 is coupled with a guide 12 movably disposed within the cylinder bore 1B such that the guide 12 secures the valve sheet 11 in place. The plug 10 is movable guided by the guide 12. The plug 10 is urged by a spring 13 from below in a direction of seating the valve sheet 11 on the valve seat 9. An end of the spring 13, on a side opposite to the plug 10, is received by a closing member 14 closing an opening of the cylinder bore 1B. The closing member 14 is pressed into the body 1 and fluidtightly sealed against a gasket by a screw 15 screwed into the opening end of the cylinder bore 1B. In an upper portion of the cylinder bore 1B a piston 16 is disposed vertically movable. The piston 16 has a peripheral V packing 17 for preventing fluid leakage along a sliding portion. The piston 16 is integrally formed with a central axial shaft 18 extending toward the guide 12. Another pressure chamber P2 above the piston 16 communicates with the pressure chamber P1 of the piston 3 via a passage 19 which is formed in the body 1.

The cylinder bore 1A opening in the top side of the body 1 is provided with a pilot valve formed by a two-way solenoid valve. This pilot valve includes a hollow portion that opens upward and a valve seat-forming member 20 formed with a central valve hole 20a forming an inlet port of the two-way solenoid valve. The valve seat-forming member 20 is fitted into the cylinder bore 1A above the piston 3 and receives the spring 8 provided in the pressure chamber P1. A vertically movable holder 21 is disposed in a hollow portion of the valve seat-forming member 20. The holder 21 holds a valve element 22 opposed to the valve hole 20a. The holder 21 is urged by a spring 23 in a direction in which the valve element 22 is moved away from the valve hole 20a. The valve seat-forming member 20 has a passage 24 in a side wall. The passage 24 forms an outlet port of the two-way solenoid valve. The passage 24 communicates with the medium-pressure port B via a pressure passage 25 formed in the body 1.

The pilot valve has a core 26 with a lower end which is screwed onto an outer peripheral portion of the valve seat-forming member 20. An upper end of the core 26 is fitted into a sleeve 27. The sleeve 27 contains a vertically movable plunger 28 which is urged downward by a spring 30 disposed between the plunger 28 and a plug 29 closing an upper opening of the sleeve 27. Between the plunger 28 and the holder 21, a shaft 31 is disposed extending through the core 26. A coil 32 is circumferentially arranged outside the sleeve 27. The coil 32 is surrounded by a casing 33 forming a yoke, a lower end of which is screwed onto the body 1.

It should be noted that the spring 23 is stronger than the spring 30. Hence, when the coil 32 is not energized, the holder 21 is in abutment with the core 26, whereby the plunger 28 is spaced away from the core 26 by the shaft 31.

When the pilot valve coil 32 is not energized (solenoid OFF), no attracting force is generated between the plunger 28 and the core 26, so that (Fig. 1), the pilot valve is open to connect the pressure chamber P1 with the medium-pressure port B via the pilot valve and the pressure passage 25.

When fluid (e.g. high-pressure refrigerant) is introduced under pressure into the high-pressure port A, the fluid pushes the piston 3 upward to open the first main valve M1. The pressure reaches the pressure chamber P1 via the orifice 6. However, since the pressure chamber P1 then communicates with the medium-pressure port B, a state is maintained in which the pressure on the lower side of the piston 3 is constantly held high, and the pressure on the upper side of the piston 3 is constantly held medium, i.e. lower than the high pressure due to pressure loss caused by fluid passing through the first main valve M1. The first main valve M1 maintains its valve-open state. On the other hand, the pressure in the medium-pressure port B is held at a medium pressure, close to the high pressure, while the pressure in the low-pressure port C is held at low pressure sufficiently lower than the medium-pressure, so that the second main valve M2 is closed by the differential pressure between these pressures. At this time, the piston 16 is about to be pushed downward due to medium pressure in the pressure chamber P2 above the piston 16 and due to the low pressure present on the lower side of the piston 16. However, the piston 16 has an effective pressure-receiving area smaller than that of the plug 10, and the upward urging force of the spring 13 is applied to the piston 16, so that the force received from the plug 10 for pushing upward the piston 16 is larger than the force applied thereto for pushing the same downward. Thus, as indicated by an arrow in Fig. 1, the fluid flowing into the high-pressure port A flows out from the medium-pressure port B through the first main valve M1.

Then, when the coil 32 is energized (solenoid ON), (Fig. 2), the plunger 28 is attracted toward the core 26 against the urging force of the spring 23 within the valve seat-forming member 20. The plunger 28 pushes the holder 21 downward via the shaft 31. The valve element 22 closes the valve hole 20a. The pressure in the pressure chamber P1 is increased to become equal to the pressure on the lower side of the piston 3. The piston 3 is pushed downward (Fig. 2) by the urging force of the spring 8. The valve sheet 4 is seated on the valve seat 5 to close the first main valve M1. At this time, the pressure in the pressure chamber P2 above the piston 16 becomes equal to the high pressure of the pressure chamber P1 in the piston 3 via the passage 19. The piston 16 overcomes the urging force of the spring 13 and pushes the guide 12 and the plug 10 downward. The valve sheet 11 moves away from the valve seat 9 to open the second main valve M2. Consequently, the fluid flowing into the medium-pressure port B flows out from the low-pressure port C through the second main valve M2 as indicated by an arrow in Fig. 2.

In the three-way valve in Figs. 1, 2, when the solenoid is off, the three-way valve establishes communication between the high-pressure port A and the medium-pressure port B and blocks communication between the medium-pressure port B and the low-pressure port C.

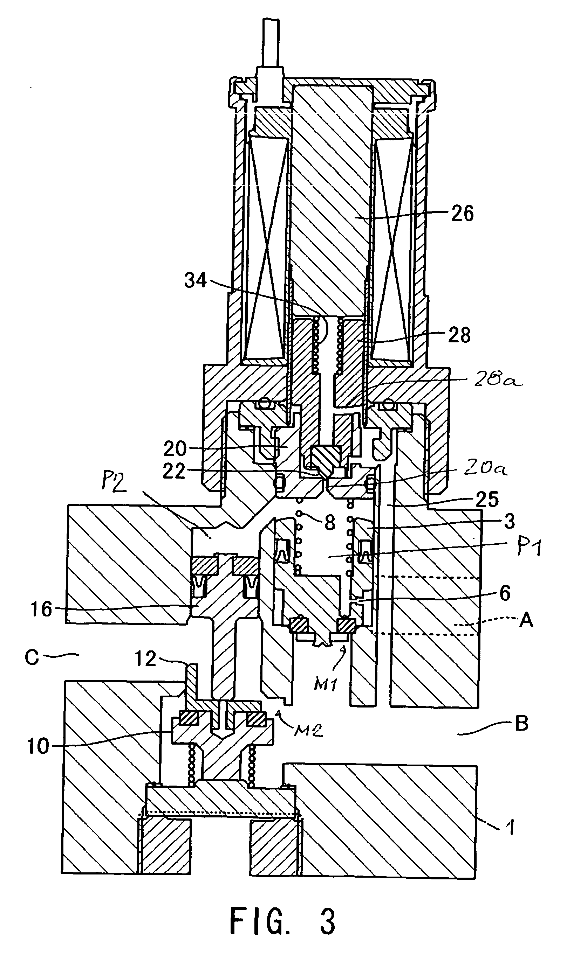

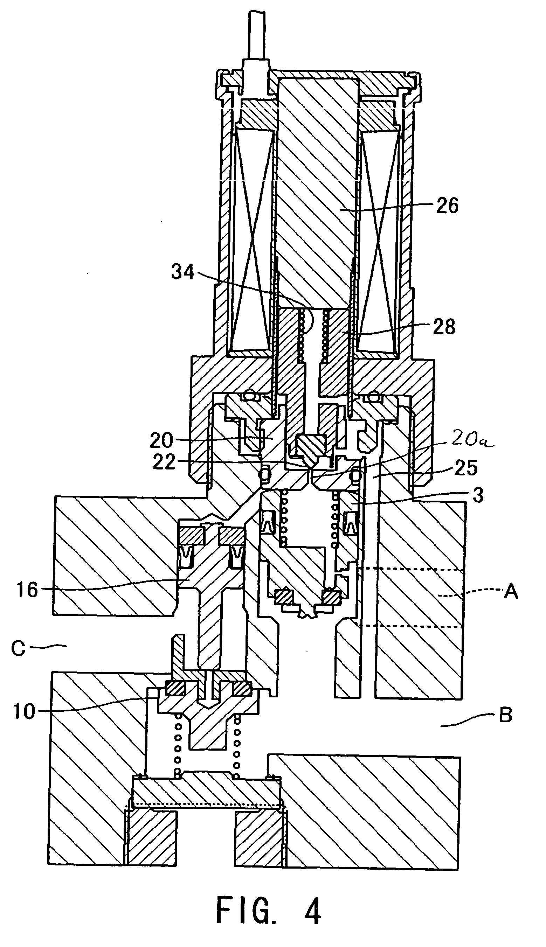

In the three-way valve in Figs. 3, 4, when the solenoid is off, the three-way valve blocks the communication between the high-pressure port A and the medium-pressure port B and establishes the communication between the medium-pressure port B and the low-pressure port C. The three-way valve in Figs. 3, 4 is structurally identical to the three-way valve of Figs. 1, 2 but is distinguished therefrom by the construction of the pilot valve.

More specifically, the pilot valve in Figs. 3, 4 has the plunger 28 disposed toward the valve seat-forming member 20 such that the positional relationship between the plunger 28 and the core 26 is reversed. Disposed between the core 26 and the plunger 28 is a spring 34, and the plunger 28 holds the valve element 22 at a lower end opposed to the valve hole 20a of the valve seat-forming member 20. Further, the plunger 28 is formed with a lateral pressure-equalizing hole 28a for communicating a gap between the plunger 28 and the core 26 and the pressure passage 25 formed in the body 1.

When the pilot valve coil is not energized (solenoid OFF), the plunger 28 is urged by the spring 34 in a direction away from the core 26, so that the pilot valve is in its valve-closed state and the pressure chamber P1 of the piston 3 of the first main valve M1 is closed by the pilot valve.

Now, when fluid is introduced into the high-pressure port A, the pressure chamber P1 of the piston 3 and the pressure chamber P2 above the piston 16 are closed by the pilot valve, so that both pressure chambers P1, P2 receive high pressure introduced via the orifice 6 of the piston 3. The pressures on the upper and lower sides of the piston 3 are equal. The piston 3 is pushed downward by the urging force of the spring 8 to close the first main valve M1. At this time, the high pressure is blocked by the first main valve M1 to increase pressure in the pressure chamber P2 above the piston 16. The piston 16 is pushed downward, and hence the guide 12 and the plug 10 are pushed downward to open the second main valve M2. This causes the fluid flowing into the medium-pressure port B to flow out from the low-pressure port C through the second main valve M2.

Then, when the solenoid is on, (Fig. 4) the plunger 28 is attracted by the core 26 against the urging force of the spring 34. The valve element 22 is moved away from the valve hole 20a to open the pilot valve. Consequently, the pressure chambers P1, P2 communicate with the medium-pressure port B via the pilot valve and the pressure passage 25. The piston 3 is pushed upward by the high pressure to open the first main valve M1. This makes the pressure in the medium-pressure port B a medium pressure close to the high pressure, whereby the plug 10 is pushed upward to close the second main valve M2. As a result, the fluid flowing into the high-pressure port A flows out from the medium-pressure port B through the first main valve.

The two structurally different types of three-way valves may be selectively employed as required according to systems into which they are incorporated.

## Claims

1. A three-way valve comprising a body (1) with a high-pressure port (A), a medium-pressure port (B) and a low-pressure port (C) and flow passages respectively communicating the ports, respective first and second valve seats (5, 9) of first and second main valves (M1, M2), at least one moveable valve element (4, 11), first and second valve element actuating pistons (3, 16) arranged in respective pressure chambers (P1, P2), a solenoid actuated pilot valve (20, 22) for respectively controlling the pressures in the pressure chambers (P1, P2), the three-way valve being designed for switching between a first state in which the high-pressure port (A) is connected with the medium-pressure port (B) and a second state in which the medium-pressure port (B) is connected with the low-pressure port (C)
**characterised in that**
the first main valve (M1) has a moveable first valve element (4) upstream in flow direction from the high-pressure port (A) to the medium-pressure port (B) of the first valve seat (5) which is arranged in the passage (1 B) between the high-pressure port (A) and the medium-pressure port (B),
that the first valve element (4) is connected to the first piston (3), which is moveably arranged in the first pressure chamber (P1) which is situated upstream of the first valve seat (5) in the body (1), the first pressure chamber (P1) and the first piston (3) having a larger pressure receiving area than the first valve seat (5),
that in the first piston (3) an orifice (6) is arranged between the high-pressure port (A) and the first pressure chamber (P1),
that a first spring (8) loads the first piston (3) in valve closing direction of the first valve element (4),
that the second main valve (M) has a moveable second valve element (11) upstream of the second valve seat (9) in flow direction from the medium-pressure port (B) to the low-pressure port (C), which second valve seat (9) is arranged in a cylinder bore passage (1 B) between the medium-pressure port (B) and the low-pressure port (C),
that the second piston (16) is moveably arranged in the second pressure chamber (P2) downstream of the second valve seat (9), and that the second pressure chamber (P2) communicates with the first pressure chamber (P1), such that the second piston (16) abuts in valve opening direction through the second valve seat (9) at the second valve element (11),
that a second spring (13) is urging the second valve element (11) in valve closing direction,
and that the pilot valve (20, 22) controls a pressure passage (25) extending from the medium-pressure port (B) to the first and second pressure chambers (P1, P1, P2) by solenoid force such that by the solenoid force the pressure passage (25) either is blocked versus the first and second pressure chambers (P1, P2) or is opened into the first and second pressure chambers (P1, P2).

2. Three-way valve according to claim 1, **characterised in that** the pressure passage (25) is formed within the body (1).

3. Three-way valve according to claim 1, **characterised in that** the interior of the solenoid section of the solenoid actuated pilot valve is connected to the medium-pressure port (B) via the pressure passage (25) in the body (1):

4. Three-way valve according to claim 1, **characterised in that** the first valve element (4) and the second valve element (11) at their respective valve seat seating portions are equipped with valve sheets made of a resilient material.

5. Three-way valve according to claim 1, **characterised in that** respective sliding portions of the first and second pistons (3, 16) are equipped with sealing members (7, 17).

6. Three-way valve according to claim 1, **characterised in that** the pilot valve is a two-way solenoid valve comprising a valve element (22) which is either moved by the solenoid force in valve closing direction or is moved by the solenoid force in valve opening direction.

## Patentansprüche

1. Drei-Wege-Ventil mit einem Körper (1) mit einem Hochdruckanschluss (A), einem Mitteldruckanschluss (B) und einem Niederdruckanschluss (C) und die Anschlüsse verbindenden Strömungspassagen, jeweiligen ersten und zweiten Ventilsitzen (5, 9) von ersten und zweiten Hauptventilen (M1, M2), zumindest einem beweglichen Ventilelement (4, 11), ersten und zweiten, Ventilelemente betätigenden Kolben (3, 16), die in jeweiligen Druckkammern (P1, P2) angeordnet sind, einem magnetbetätigten Pilotventil (20, 22) zum Steuern der jeweiligen Drücke in den Druckkammern (P1, P2), wobei das Drei-Wege-Ventil zwischen einem ersten Zustand und einem zweiten Zustand umschaltbar ist und in dem ersten Zustand der Hochdruckanschluss (A) mit dem Mitteldruckanschluss (B) und in dem zweiten Zustand der Mitteldruckanschluss (B) mit dem Niederdruckanschluss (C) verbunden wird,
**dadurch gekennzeichnet,**
**dass** das erste Hauptventil (M1) in Strömungsrichtung von dem Hochdruckanschluss (A) zu dem Mitteldruckanschluss (B) stromauf des ersten Ventilsitzes (5) ein bewegliches erstes Ventilelement (4) aufweist, das in einer der Strömungspassagen (1 B) zwischen dem Hochdruckanschluss (A) und dem Mitteldruckanschluss (B) angeordnet ist,
**dass** das erste Ventilelement (4) mit dem ersten Kolben (3) verbunden ist, der in der ersten Druckkammer (P1) beweglich angeordnet ist, welche erste Druckkammer (P1) stromauf des ersten Ventilsitzes (5) in dem Körper (1) angeordnet ist, wobei die erste Druckkammer (P1) und der erste Kolben (3) eine größere Druckaufnahmefläche als der erste Ventilsitz (5) aufweisen,
**dass** in dem ersten Kolben (3) zwischen dem Hochdruckanschluss (A) und der ersten Druckkammer (P1) eine Blende (6) angeordnet ist,
**dass** der erste Kolben (3) in Ventilschließrichtung des ersten Ventilelementes (4) durch eine erste Feder (8) beaufschlagt ist,
**dass** das zweite Hauptventil (M) in Strömungsrichtung von dem Mitteldruckanschluss (B) zu dem Niederdruckanschluss (C) stromauf des zweiten Ventilsitzes (9) ein bewegliches zweites Ventilelement (11) aufweist, wobei der zweite Ventilsitz (9) in einer Zylinderbohrungs-Strömungspassage (1 B) zwischen dem Mitteldruckanschluss (B) und dem Niederdruckanschluss (C) angeordnet ist,
**dass** der zweite Kolben (16) stromab des zweiten Ventilsitzes (9) in der zweiten Druckkammer (P2) beweglich angeordnet ist, wobei die zweite Druckkammer (P2) mit der ersten Druckkammer (P1) so kommuniziert, dass der zweite Kolben (16) in Ventilöffnungsrichtung durch den zweiten Ventilsitz (9) greift und an dem zweiten Ventilelement (11) anliegt,
**dass** das zweite Ventilelement (11) in Ventilschließrichtung durch eine zweite Feder (13) beaufschlagt wird,
und **dass** das Pilotventil (20, 22) eine Druckpassage (25) durch Magnetkraft derart steuernd überwacht, die sich von dem Mitteldruckanschluss (B) zu den ersten und zweiten Druckkammern (P1, P2) erstreckt, und, dass durch die Magnetkraft die Druckpassage (25) gegenüber den ersten und zweiten Druckkammern (P1, P2) entweder blockiert oder zu den ersten und zweiten Druckkammern (P1, P2) geöffnet ist.

2. Drei-Wege-Ventil gemäß Anspruch 1, **dadurch gekennzeichnet, dass** die Druckpassage (25) im Inneren des Körpers (1) ausgebildet ist.

3. Drei-Wege-Ventil gemäß Anspruch 1, **dadurch gekennzeichnet, dass** in dem Körper (1) das Innere einer Magnetsektion des magnetbetätigten Pilotventils über die Druckpassage (25) mit dem Mitteldruckanschluss (B) verbunden ist.

4. Drei-Wege-Ventil gemäß Anspruch 1, **dadurch gekennzeichnet, dass** das erste Ventilelement (4) und das zweite Ventilelement (11) an ihren jeweiligen Ventilsitz-Aufsitzbereichen mit Ventileinsätzen ausgestattet sind, die aus einem nachgiebigen Material hergestellt sind.

5. Drei-Wege-Ventil gemäß Anspruch 1, **dadurch gekennzeichnet, dass** jeweilige Gleitbereiche der ersten und zweiten Kolben (3, 16) mit Dichtungsgliedem (7, 17) ausgestattet sind.

6. Drei-Wege-Ventil gemäß Anspruch 1, **dadurch gekennzeichnet, dass** das Pilotventil ein Zwei-Wege-Magnetventil mit einem Ventilelement (22) ist, welches Ventilelement durch die Magnetkraft entweder in Ventilschließrichtung oder in Ventilöffnungsrichtung verstellbar ist.

## Revendications

1. Soupape à trois voies comprenant un corps (1) avec un orifice à haute pression (A), un orifice à moyenne pression (B) et un orifice à basse pression (C) et des passages d'écoulement faisant respectivement communiquer les orifices, des premier et second sièges de soupape respectifs (5, 9) de première et seconde soupapes principales (M1, M2), au moins un élément de soupape mobile (4, 11), des premier et second pistons d'actionnement d'élément de soupape (3, 16) agencés dans des chambres de pression respectives (P1, P2), une soupape pilote à commande par solénoïde (20, 22) pour respectivement contrôler les pressions dans les chambres de pression (P1, P2), la soupape à trois voies étant conçue pour commuter entre un premier état dans lequel l'orifice à haute pression (A) est raccordé à l'orifice à moyenne pression (B) et un second état dans lequel l'orifice à moyenne pression (B) est raccordé à l'orifice à basse pression (C),
**caractérisée en ce que**
la première soupape principale (M1) possède un premier élément de soupape mobile (4) en amont dans la direction d'écoulement à partir de l'orifice à haute pression (A) jusqu'à l'orifice à moyenne pression (B) du premier siège de soupape (5) qui est agencé dans le passage (1B) entre l'orifice à haute pression (A) et l'orifice à moyenne pression (B),
que le premier élément de soupape (4) est relié au premier piston (3), qui est agencé de façon mobile dans la première chambre de pression (P1) qui est situé en amont du premier siège de soupape (5) dans le corps (1), la première chambre de pression (P1) et le premier piston (3) possédant une superficie de réception de pression plus importante que le premier siège de soupape (5),
que, dans le premier piston (3), un orifice (6) est agencé entre l'orifice à haute pression (A) et la première chambre de pression (P1),
qu'un premier ressort (8) charge le premier piston (3) dans la direction de fermeture de soupape du premier élément de soupape (4),
que la seconde soupape principale (M) possède un second élément de soupape mobile (11) en amont du second siège de soupape (9) dans la direction d'écoulement à partir de l'orifice à moyenne pression (B) jusqu'à l'orifice à basse pression (C), lequel second siège de soupape (9) est agencé dans un passage d'alésage de cylindre (1B) entre l'orifice à moyenne pression (B) et l'orifice à basse pression (C),
que le second piston (16) est agencé de façon mobile dans la seconde chambre de pression (P2) en aval du second siège de soupape (9), et que la seconde chambre de pression (P2) communique avec la première chambre de pression (P1), de sorte que le second piston (16) prenne appui dans la direction d'ouverture de soupape à travers le second siège de soupape (9) au niveau du second élément de soupape (11),
qu'un second ressort (13) pousse le second élément de soupape (11) dans la direction de fermeture de soupape,
et que la soupape pilote (20, 22) commande un passage de pression (25) s'étendant à partir de l'orifice à moyenne pression (B) jusqu'aux première et seconde chambres de pression (P1, P1, P2) par une force de solénoïde de sorte que, par la force de solénoïde, le passage de pression (25) est soit bloqué contre les première et seconde chambres de pression (P1, P2) soit ouvert dans les première et second chambres de pression (P1, P2).

2. Soupape à trois voies selon la revendication 1, **caractérisée en ce que** le passage de pression (25) est formé à l'intérieur du corps (1).

3. Soupape à trois voies selon la revendication 1, **caractérisée en ce que** l'intérieur de la section de solénoïde de la soupape pilote à commande par solénoïde est raccordé à l'orifice à moyenne pression (B) par l'intermédiaire du passage de pression (25) dans le corps (1).

4. Soupape à trois voies selon la revendication 1, **caractérisée en ce que** le premier élément de soupape (4) et le second élément de soupape (11) à leurs parties de siège de soupape respectives sont équipés de feuilles de soupape faites d'un matériau élastique.

5. Soupape à trois voies selon la revendication 1, **caractérisée en ce que** des parties coulissantes respectives des premier et second pistons (3, 16) sont équipées d'éléments d'étanchéité (7, 17).

6. Soupape à trois voies selon la revendication 1, **caractérisée en ce que** la soupape pilote est une soupape à solénoïde à deux voies comprenant un élément de soupape (22) qui est soit déplacé par la force de solénoïde dans la direction de fermeture de soupape soit déplacé par la force de solénoïde dans la direction d'ouverture de soupape.
